# EUROPEAN PATENT APPLICATION

(11) **EP 4 618 408 A2**
(43) Date of publication of application: **17.09.2025**
(21) Application number: 25720235.8
(22) Date of filing: 25.03.2025
(51) Int. Cl.: H02S 40/32

(54) **INVERTER APPARATUS AND CONTROL METHOD THEREFOR, AND PHOTOVOLTAIC SYSTEM**

(71) Applicant: Suzhou Xinchengen Technology Co., Ltd, Suzhou, Jiangsu 215100 (CN)
(72) Inventor: JIANG, Weipeng, Suzhou Jiangsu 215100 (CN); WANG, Fan, Suzhou Jiangsu 215100 (CN); CHEN, Xiaochun, Suzhou Jiangsu 215100 (CN)
(74) Representative: Mathys & Squire
(86) International application number: PCT/CN2025/084690
(87) International publication number: WO 2025/149098

(57) **Abstract**

Embodiments of the present disclosure provide an inverter device, a control method thereof, and a photovoltaic system. The inverter device comprises: a housing; a first input port adapted to be coupled to a first photovoltaic cell; a second input port adapted to be coupled to a second photovoltaic cell different from the first photovoltaic cell; an output port adapted to be coupled to an AC grid or equipment; a DC-DC conversion circuit located within the housing, the DC-DC conversion circuit having an input side coupled to the first input port and an output side coupled to the second input port; a DC-AC conversion circuit located within the housing, the DC-AC conversion circuit having an input side coupled to the second input port and an output side coupled to the output port; and a controller coupled to the DC-DC conversion circuit and the DC-AC conversion circuit and configured to control the DC-DC conversion circuit and the DC-AC conversion circuit. Embodiments of the present disclosure may enable two types of photovoltaic cells with different voltage levels to be efficiently connected to an AC grid or equipment.

## Description

### FIELD

The present disclosure relates to technologies of photovoltaic power generation and power electronics, and more specifically, to an inverter device, a photovoltaic system comprising the inverter device, a method and apparatus for controlling the inverter device, a computer-readable storage medium, and a computer program product.

### BACKGROUND

Photovoltaic power generation uses the photovoltaic effect of photovoltaic cells to convert solar or light energy into electrical energy, and has many advantages such as cleanness, environment-friendliness and re-generation. In order to ensure that the electrical energy generated by the photovoltaic cells can meet the usage requirements of a power grid or a load and to improve the power generation efficiency of the photovoltaic cells, a power conversion apparatus such as an inverter device usually needs to be provided to convert the voltage or current generated by the photovoltaic cells into the desired voltage and current.

In photovoltaic power generation technology, the inverter device may concentrate the output of a large number of photovoltaic modules for power conversion to supply the power to a grid or a load, or may convert the output of a single photovoltaic module or a very small number of photovoltaic modules for power conversion to supply power to the grid or load. The inverter device in the latter case also referred to as a micro-inverter device or a module-level inverter device. Currently, as the photovoltaic technology develops constantly, some new types of photovoltaic modules arise constantly. However, there is a lack of inverter devices, particularly micro-inverter devices, for connecting these photovoltaic modules to the grid or load.

### SUMMARY

To at least partially solve the above and other potential problems, embodiments of the present disclosure provide an inverter device, a photovoltaic system, a method and apparatus for controlling the inverter device, a computer-readable storage medium, and a computer program product.

According to a first aspect of the present disclosure, there is provided an inverter device, comprising: a housing; a first input port adapted to be coupled to a first photovoltaic cell; a second input port adapted to be coupled to a second photovoltaic cell different from the first photovoltaic cell; an output port adapted to be coupled to an AC grid or equipment; a DC-DC conversion circuit located within the housing, the DC-DC conversion circuit having an input side coupled to the first input port and an output side coupled to the second input port; a DC-AC conversion circuit located within the housing, the DC-AC conversion circuit having an input side coupled to the second input port and an output side coupled to the output port; and a controller coupled to the DC-DC conversion circuit and the DC-AC conversion circuit and configured to control the DC-DC conversion circuit and the DC-AC conversion circuit.

In some embodiments of the present disclosure, the controller is configured to control the DC-AC conversion circuit to track a maximum power point of the second photovoltaic cell, and control the DC-DC conversion circuit to take an optimal operating voltage associated with the maximum power point of the second photovoltaic cell as a desired output voltage and track the maximum power point of the first photovoltaic cell.

In some embodiments of the present disclosure, the DC-AC conversion circuit comprises a DC-DC converter and a DC-AC converter coupled in series, and the controller is configured to control the DC-DC converter in the DC-AC conversion circuit to track the maximum power point of the second photovoltaic cell, and control the DC-DC conversion circuit to take the optimal operating voltage associated with the maximum power point of the second photovoltaic cell as the desired output voltage and track the maximum power point of the first photovoltaic cell.

In some embodiments of the present disclosure, the first input port comprises a plurality of sub-input ports, and the DC-DC conversion circuit comprises a plurality of DC-DC converters which have input sides coupled to the plurality of sub-input ports, respectively, and have output sides coupled in series, in parallel, or in a series/parallel manner.

In some embodiments of the present disclosure, the first photovoltaic cell comprises a plurality of groups of photovoltaic cell units, the plurality of sub-input ports being adapted to be coupled to the plurality of groups of photovoltaic cell units respectively, the controller is configured to control the DC-AC conversion circuit to track the maximum power point of the second photovoltaic cell, and control the corresponding DC-DC converter in the plurality of DC-DC converters to track the maximum power point of the group of photovoltaic cell units corresponding to the corresponding DC-DC converter.

In some embodiments of the present disclosure, the DC-AC conversion circuit comprises an LLC-based inverter.

In some embodiments of the present disclosure, the DC-DC converter in the DC-AC conversion circuit comprises a flyback-type DC boost converter, and the DC-AC converter in the DC-AC conversion circuit comprises a full-bridge inverter.

In some embodiments of the present disclosure, the first photovoltaic cell comprises a crystalline silicon cell, the second photovoltaic cell comprises a perovskite cell, and the DC-DC conversion circuit comprises a DC boost converter.

In some embodiments of the present disclosure, the first photovoltaic cell comprises a perovskite cell, the second photovoltaic cell comprises a crystalline silicon cell, and the DC-DC conversion circuit comprises a DC buck converter.

According to a second aspect of the present disclosure, there is provided a photovoltaic system, comprising: a photovoltaic module, comprising: a first photovoltaic cell; a second photovoltaic cell assembled with the first photovoltaic cell; and the inverter device according to the first aspect, coupled to the photovoltaic module.

In some embodiments of the present disclosure, the first photovoltaic cell comprises a crystalline silicon cell located at the bottom of the photovoltaic module, and the second photovoltaic cell comprises a perovskite cell located at the top of the photovoltaic module, or the first photovoltaic cell comprises a perovskite cell located at the top of the photovoltaic module, and the second photovoltaic cell comprises a crystalline silicon cell located at the bottom of the photovoltaic module.

In some embodiments of the present disclosure, the first photovoltaic cell and the second photovoltaic cell are assembled together in a stacked manner.

According to a third aspect of the present disclosure, there is provided a method for controlling an inverter device, comprising: obtaining first sensing information indicating an output voltage and current of a first photovoltaic cell, the first photovoltaic cell coupled to an AC grid or equipment via a first input port, a DC-DC conversion circuit, a DC-AC conversion circuit, and an output port of the inverter device; determining a maximum power point of the first photovoltaic cell based on an optimal operating voltage of the second photovoltaic cell as a desired output voltage of the DC-DC conversion circuit and based on the first sensing information, the optimal operating voltage representing a voltage output by the second photovoltaic cell and associated with the maximum power point of the second photovoltaic cell, the second photovoltaic cell being coupled to the AC grid or equipment via a second input port, an output side of the DC-DC conversion circuit, the DC-AC conversion circuit and the output port of the inverter device; and generating a first control signal for the DC-DC conversion circuit based on the optimal operating voltage of the second photovoltaic cell and the determined maximum power point of the first photovoltaic cell.

In some embodiments of the present disclosure, the method further comprises: obtaining second sensing information indicating an input voltage and current of the DC-AC conversion circuit; determining the maximum power point and the optimal operating voltage of the second photovoltaic cell based on the second sensing information; and generating a second control signal for the DC-AC conversion circuit based on the determined maximum power point of the second photovoltaic cell.

In some embodiments of the present disclosure, a time interval for generating the first control signal is less than that for generating the second control signal.

In some embodiments of the present disclosure, the obtaining first sensing information indicating an output voltage and current of the first photovoltaic cell comprises: obtaining a plurality of pieces of sub-sensing information respectively indicating output voltages and currents of a plurality of groups of photovoltaic cell units in the first photovoltaic cell. The determining a maximum power point of the first photovoltaic cell comprises: for each DC-DC converter of the plurality of DC-DC converters, determining a desired output voltage corresponding to the corresponding DC-DC converter based on the optimal operating voltage; and determining the maximum power point of a corresponding group of photovoltaic cell units based on the corresponding sub-sensing information and the corresponding desired output voltage. The generating a first control signal for the DC-DC conversion circuit comprises: for each DC-DC converter of the plurality of DC-DC converters, generating a control signal for the corresponding DC-DC converter based on the corresponding desired output voltage and the maximum power point of a group of photovoltaic cell units corresponding to the corresponding DC-DC converter.

According to a fourth aspect of the present disclosure, there is provided a control apparatus for an inverter device, the control apparatus comprising: a processor; and a memory coupled to the processor, the memory having instructions stored therein which, when executed by the processor, cause the controller to perform the method according to the third aspect.

According to a fifth aspect of the present disclosure, there is provided a computer readable storage medium having stored thereon computer program code which, when executed, performs the method according to the third aspect.

According to a sixth aspect of the present disclosure, there is provided a computer program product tangibly stored on a non-volatile computer readable medium and comprising machine executable instructions which, when executed, cause a machine to perform the steps of the method according to the third aspect.

The Summary is provided to introduce a selection of concepts in a simplified form that are further described below in the Detailed Description. This Summary is not intended to identify key features or essential features of the disclosure, nor is it intended to limit the scope of the disclosure.

### BRIEF DESCRIPTION OF THE DRAWINGS

Through the following detailed description of example embodiments with reference to the figures, the above and other objectives, features and advantages of the present disclosure will become more apparent, wherein the same reference numerals usually denote the same parts in the example embodiments of the present disclosure.
FIG. 1 illustrates a schematic circuit diagram of a photovoltaic system and an AC grid or equipment according to an embodiment of the present disclosure.
FIG. 2 illustrates an external view of an inverter device according to an embodiment of the present disclosure.
FIG. 3 illustrates a schematic circuit diagram of a photovoltaic system according to an embodiment of the present disclosure.
FIG. 4 illustrates a schematic circuit diagram of a photovoltaic system according to an embodiment of the present disclosure.
FIG. 5A and FIG. 5B illustrate schematic circuit diagrams of a DC-DC conversion circuit in an inverter device according to an embodiment of the present disclosure.
FIG. 6A and FIG. 6B show schematic circuit diagrams of a two-stage circuit in a DC-AC conversion circuit of an inverter device according to an embodiment of the present disclosure.
FIG. 7 illustrates a schematic circuit diagram of a single-stage circuit in a DC-AC conversion circuit of an inverter device according to an embodiment of the present disclosure.
FIG. 8 illustrates a schematic circuit diagram of a photovoltaic system according to an embodiment of the present disclosure.
FIG. 9A and FIG. 9B illustrate schematic circuit diagrams of a first input port and a DC-DC conversion circuit in an inverter device according to an embodiment of the present disclosure.
FIG. 10 illustrates a schematic flowchart of a method for controlling an inverter device according to an embodiment of the present disclosure.
FIG. 11 illustrates a schematic flowchart of a process for controlling an inverter device according to an embodiment of the present disclosure.
FIG. 12 illustrates a schematic diagram of a control apparatus for controlling an inverter device according to an embodiment of the present disclosure.

### DETAILED DESCRIPTION OF EMBODIMENTS

Embodiments of the present disclosure will now be described in detail with reference to the accompanying drawings. Although the drawings illustrate some embodiments of the present disclosure, it would be appreciated that the present disclosure may be implemented in various manners but cannot be construed as being limited by the embodiments illustrated herein. Rather, these embodiments are provided to disclose the present disclosure more thoroughly and completely and enable the scope of the present disclosure to be conveyed to those skilled in the art completely. Those skilled in the art can obtain alternative technical solutions from the following description without departing from the spirit and scope of the present disclosure.

The term "include" and its variants used in the text herein are to be read as open-ended terms that mean "comprises, but is not limited to". The term "or" means "and/or" unless otherwise specified. The term "based on" is to be read as "based at least in part on." The term "an example" or "one embodiment" is to be read as "at least one example embodiment" Other definitions, either explicit or implicit, may also be included below.

Embodiments of the present disclosure provide an improved photovoltaic inversion solution. In the improved solution, at least two stages of power conversion circuits are disposed within a housing of an inverter device, and one stage of power conversion circuit in the at least two stages of power conversion circuits is disposed between two input ports. In this way, the inverter device may receive output power from a first photovoltaic cell and a second photovoltaic cell with different voltage levels, perform power conversion, and directly supply the converted power to a later-stage AC grid or AC equipment. Furthermore, the improved solution can also achieve maximum power point tracking for both the first photovoltaic cell and the second photovoltaic cell, to ensure that both types of photovoltaic cells can operate at their highest power generation efficiency. In some new types of photovoltaic modules, two different types of photovoltaic cells with much different output voltages are assembled into a single photovoltaic module, which presents challenges for grid connection, particularly the lack of a micro-inversion solution for directly connecting such a single photovoltaic module to the AC grid or AC equipment. The solution of the present disclosure enables a photovoltaic module with two different types of photovoltaic cells to be directly connected to the grid or an AC load through a single inverter device, and enables independent power conversion and control for each photovoltaic module and each different type of cell within each photovoltaic module, thereby providing higher flexibility and reliability, reducing power consumption, lowering costs and maximizing system efficiency.

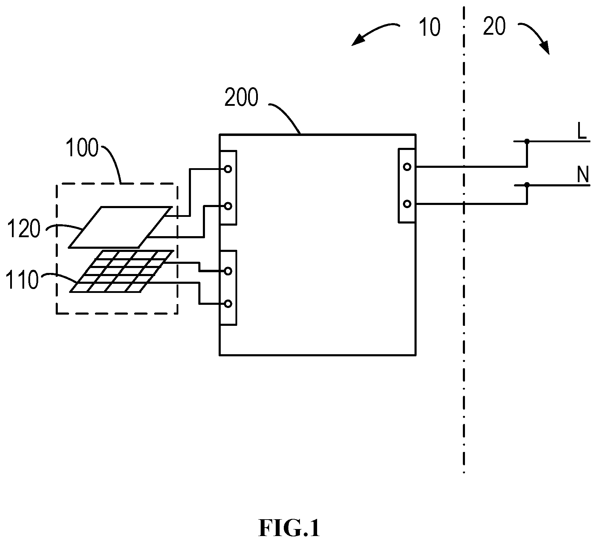

FIG. 1 illustrates a schematic circuit diagram of a photovoltaic system 10 and an AC grid or equipment 20 according to an embodiment of the present disclosure. As shown in FIG. 1, the photovoltaic system 10 and the AC grid or equipment 20 are coupled to each other, and the photovoltaic system 10 feeds the electrical energy generated by photovoltaic power generation into the AC grid or equipment 20. For example, the AC grid or equipment 20 may be an AC distribution network, which comprises a live line L and a neutral line N. In another example, the AC grid or equipment 20 may be an AC busbar, which aggregates the electrical energy output from a plurality of photovoltaic systems or a plurality of photovoltaic modules for transmission to the external. In yet another example, the AC grid or equipment 20 may be an AC load, which receives and consumes the AC electrical energy generated by the photovoltaic system 10. It may be appreciated that the AC grid or equipment 20 may be an AC power network, AC equipment, or AC load of different levels or types, and the present disclosure does not impose limitations on this.

The photovoltaic system 10 comprises a photovoltaic module 100. The photovoltaic module 100 comprises a first photovoltaic cell 110 and a second photovoltaic cell 120. The first photovoltaic cell 110 and the second photovoltaic cell 120 may be assembled together, for example, through fastening components or other assembling means. As such, the first photovoltaic cell 110 and the second photovoltaic cell 120 may form a single photovoltaic module. It may be appreciated that the photovoltaic module 100 may also include other components or elements required to form the module, such as encapsulation materials, support frames, etc. In one embodiment, the first photovoltaic cell 110 is located at the bottom of the photovoltaic module, and the second photovoltaic cell 120 is located at the top of the photovoltaic module. The second photovoltaic cell 120 has a wider bandgap than the first photovoltaic cell 110. The first photovoltaic cell 110 may include a crystalline silicon cell, and the second photovoltaic cell 120 may include a perovskite cell. The crystalline silicon cell is manufactured using a crystalline silicon material, and has advantages such as a high conversion efficiency, strong stability, and a mature manufacturing process. On the other hand, the perovskite cell is manufactured using a perovskite-structured material as a light-absorbing material, and is characterized by a low cost, a high light absorption coefficient, a long carrier diffusion length, a tunable bandgap (e.g., 1.17-2.8 eV), and a high theoretical conversion efficiency. In one embodiment, the first photovoltaic cell 110 comprises one or more crystalline silicon cell units, and the second photovoltaic cell 120 comprises one or more perovskite cell units. Generally, the output voltage of the first photovoltaic cell 110 is below 40V or 50V, while the output voltage of the second photovoltaic cell 120 is much higher than that of the first photovoltaic cell 110 and can reach up to 200V. In one embodiment, the first photovoltaic cell 110 and the second photovoltaic cell 120 are assembled in a vertically stacked manner, optically coupled but electrically independent. For example, in the case where the first photovoltaic cell 110 is a crystalline silicon cell and the second photovoltaic cell 120 is a perovskite cell, since the perovskite cell may be adjusted to have a bandgap of suitable width to enhance the absorption and utilization efficiency of short-wavelength light (typically absorbing high-energy photons with wavelengths less than 800 nm) and has higher light transmittance, the second photovoltaic cell 120 (specifically absorbing low-energy photons with wavelengths less than 1100 nm) may be stacked above the first photovoltaic cell 110. For instance, the sheet-like perovskite cell and sheet-like crystalline silicon cell may be stacked in a layered manner, so that the two types of photovoltaic cells are disposed into the same photovoltaic module. With the cells of different bandgaps being combined, a segmented utilization of the solar spectrum is achieved, more efficient light absorption and conversion is achieved, thereby effectively improving power conversion efficiency, and reducing energy loss without occupying additional floor space. In one example, the photovoltaic module 100 in the photovoltaic system 10 may be individually installed in a site with a small area such as a balcony or installed together with other photovoltaic modules 100 in a site with a large area such as a roof. The present disclosure does not limit the application sites of the photovoltaic system 10.

The photovoltaic system 10 further comprises an inverter device 200, which is coupled between the photovoltaic module 100 and the AC grid or equipment 20. As an example, the inverter device 200 may be a micro-inverter device that couples a single photovoltaic module 100 to the AC grid or equipment 20, and it may be installed on a back of a frame of the photovoltaic module 100 or in the vicinity of the photovoltaic module 100. The inverter device 200 may receive power from both the first photovoltaic cell 110 and the second photovoltaic cell 120 of the photovoltaic module 100, convert the received power into AC power, and output the AC power to the AC grid or equipment 20.

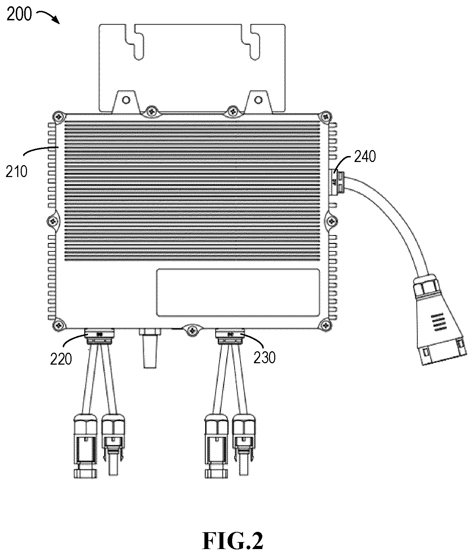

FIG. 2 illustrates an external view of the inverter device 200 according to an embodiment of the present disclosure. As shown in FIG. 2, the inverter device 200 comprises a housing 210, a first input port 220 adapted to be coupled to the first photovoltaic cell 110, and a second input port 230 adapted to be coupled to the second photovoltaic cell 210. Additionally, the inverter device 200 further comprises an output port 240, which is adapted to be coupled to the AC grid or equipment 20. For example, the first input port 220, the second input port 230, and the output port 240 may be each provided with a terminal or connector for electrical connection. With the help of the first input port 220, the second input port 230, and the output port 240, the circuits inside the housing 210 can be electrically coupled or connected to the photovoltaic module 100 and the AC grid or equipment 20, thereby transmitting the electrical power generated by the photovoltaic module 100 to the AC grid or equipment 20. It may be appreciated that the inverter device 200 may include other appropriate components on or outside its housing 210, such as a heat dissipation component and a mounting component for securing the inverter device 200.

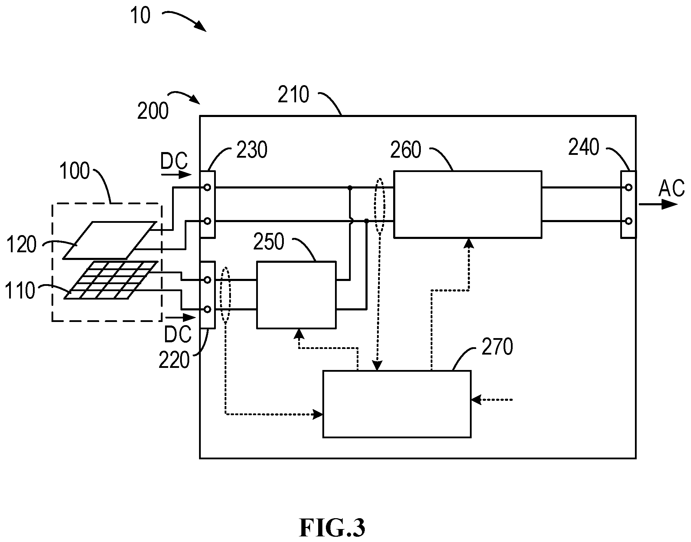

FIG. 3 illustrates a schematic circuit diagram of the photovoltaic system 10 according to an embodiment of the present disclosure. Compared to FIG. 1 and FIG. 2, FIG. 3 provides a more detailed view of the internal circuits of the inverter device 200. As shown in FIG. 3, the inverter device 200 comprises a DC-DC conversion circuit 250 located within the housing 210. The DC-DC conversion circuit 250 has an input side coupled to the first input port 220 and an output side coupled to the second input port 230. Specifically, the first input port 220 and the second input port 230, which are coupled to different photovoltaic cells, will input two different DC voltages into the interior of the inverter device 210. The DC-DC conversion circuit 250, coupled between the two input ports, may perform conversion for the voltage to convert one of the two input voltages to be the same as or similar to the other input voltage. In this way, the voltage difference between the two input voltages may be eliminated to allow the two inputs to be combined into one input which is output to the circuit of a later stage. In one embodiment, the DC-DC conversion circuit 250 comprises a DC boost (BOOST) converter. For example, if the first photovoltaic cell 110 is a crystalline silicon cell coupled to the first input port 220 and the second photovoltaic cell 120 is a perovskite cell coupled to the second input port 230, the first photovoltaic cell 110 will output a relatively low voltage (e.g., approximately 40V or 50V) to the first input port 220, while the second photovoltaic cell 120 will output a higher voltage (e.g., approximately 200V) to the second input port 230. The DC-DC conversion circuit 250, acting as a BOOST converter, may boost the lower voltage input from the crystalline silicon cell via the first input port 220 to a level substantially close to the higher voltage output by the second photovoltaic cell 120. In another embodiment, the DC-DC conversion circuit 250 comprises a DC buck (BUCK) converter. For example, if the first photovoltaic cell 110 is a crystalline silicon cell coupled to the second input port 230 and the second photovoltaic cell 120 is a perovskite cell coupled to the first input port 220 (i.e., the connections of the two photovoltaic cells with the two input ports in FIG. 3 are swapped), the first photovoltaic cell 110 will output a relatively low voltage (e.g., approximately 40V or 50V) to the second input port 230, while the second photovoltaic cell 120 will output a higher voltage (e.g., approximately 200V) to the first input port 220. The DC-DC conversion circuit 250, acting as a BUCK converter, may reduce the higher voltage input from the perovskite cell via the first input port 220 to a level substantially close to the output voltage of the first photovoltaic cell 110. The solution of the DC-DC conversion circuit 250 employing the buck circuit is suitable for a scenario where the output power of the low-voltage photovoltaic cell is relatively large and the output power of the high-voltage photovoltaic cell is relatively small. However, compared to the solution employing the buck circuit, the solution of the DC-DC conversion circuit 250 employing the boost circuit is more advantageous because the boost circuit may allow the high-voltage input to directly enter the later stage, and the low-voltage input to gradually rise to a high voltage, thereby increasing the operating voltage of the circuit of the later stage and thereby reducing the operating current, which helps minimize the power consumption of the photovoltaic system and its inverter device.

According to embodiments of the present disclosure, the inverter device 200 comprises a DC-AC conversion circuit 260. The DC-AC conversion circuit 260 is located within the housing 210 and has an input side coupled to the second input port 230 and an output side coupled to the output port 240. Specifically, the DC-AC conversion circuit 260 may perform appropriate power conversion with respect to the photovoltaic DC power from the second input port 230 and the photovoltaic DC power from the first input port 220 that has been converted by the DC-DC conversion circuit 250, to generate the AC power needed by the AC grid or equipment 20.

According to embodiments of the present disclosure, the inverter device 200 further comprises a controller 270. The controller 270 is coupled to the DC-DC conversion circuit 250 and the DC-AC conversion circuit 260 and may control the DC-DC conversion circuit 250 and the DC-AC conversion circuit 260. As an example, the controller 270 may be implemented in the form of a controller with computing and processing capabilities, for example, the controller 270 may be a microcontroller unit (MCU) or a digital signal processor (DSP). Additionally, the controller 270 may also be implemented in the form of an analog circuit and/or digital circuit, or a combination of the above forms. The controller 270 may obtain, from sensing devices, sensing information related to electrical quantities (e.g., voltage, current, etc.) of the DC-DC conversion circuit 250, the DC-AC conversion circuit 260, the first photovoltaic cell 110 and the second photovoltaic cell 120, thereby controlling the power switching devices in the DC-DC conversion circuit 250 and the DC-AC conversion circuit 260 based on the sensing information. For example, the controller 270 may send a pulse-width modulation (PWM) signal to the power switching devices to enable the DC-DC conversion circuit 250 and the DC-AC conversion circuit 260 to perform the desired power conversion operations. In some embodiments, the controller 270 may control the DC-AC conversion circuit 260 to use an optimal operating voltage associated with a maximum power point of the second photovoltaic cell 120 as the desired output voltage and track the maximum power point of the second photovoltaic cell 120, and control the DC-DC conversion circuit 250 to track the maximum power point of the first photovoltaic cell 110. As an example, the controller 270 may use the DC-DC conversion circuit 250 and the DC-AC conversion circuit 260 to perform maximum power point tracking (MPPT) on the first photovoltaic cell 110 and the second photovoltaic cell 120. The controller 270 may determine the maximum power points of the first photovoltaic cell 110 and the second photovoltaic cell 120 in a current state based on the sensing information and by using an MPPT algorithm, and may adjust the output voltage and current of the first photovoltaic cell 110 and the second photovoltaic cell 120, respectively by controlling the DC-DC conversion circuit 250 and the DC-AC conversion circuit 260. Before performing MPPT on the first photovoltaic cell 110, the controller 270 may first determine the maximum power point of the second photovoltaic cell 120 and the optimal operating voltage of the second photovoltaic cell 120, consider the optimal operating voltage as the desired output voltage of the DC-DC conversion circuit 250, and based on this, track the maximum power point of the first photovoltaic cell 110, thereby enabling both the first photovoltaic cell 110 and the second photovoltaic cell 120 to operate at their maximum power points to output the maximum power in the current state. In this way, it is possible to not only simultaneously receive the power output from two photovoltaic cells with much different voltages in a single photovoltaic module, but also ensure that both photovoltaic cells operate at the maximum output power even when environmental factors such as temperature and light intensity change. This effectively improves the power generation efficiency of the photovoltaic system and its photovoltaic modules, reduces the cost of photovoltaic power generation, and helps reduce the loss of photovoltaic modules while extending their service life.

It may be appreciated that, in addition to the circuits and components shown in FIG. 3, the inverter device 200 may also be provided with other circuits or components as needed. For example, an electromagnetic interference (EMI) filter may be provided between the first input port 220 and an input side of the DC-DC conversion circuit 250, between the second input port 220 and an output side of the DC-DC conversion circuit 250, and/or between the output port 240 and an output side of the DC-AC conversion circuit 260, respectively.

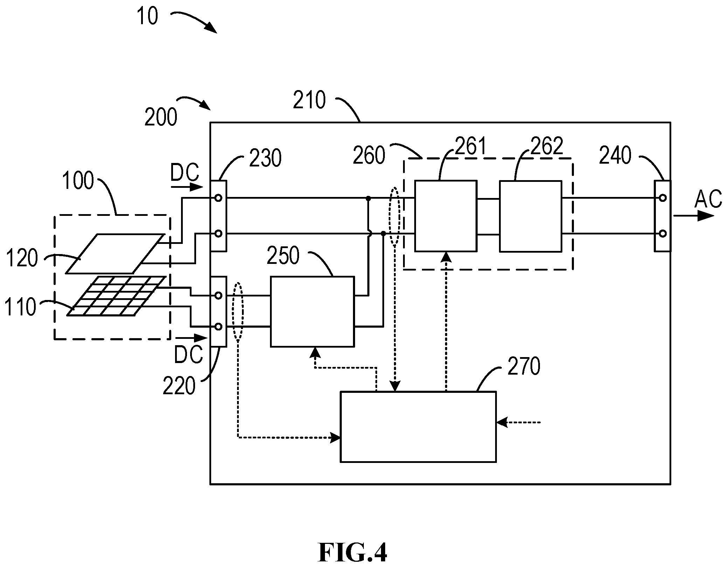

FIG. 4 illustrates a schematic circuit diagram of the photovoltaic system 10 according to another embodiment of the present disclosure. FIG. 4 differs from FIG. 3 in that FIG. 4 further illustrate an implementation of the DC-AC conversion circuit 260. As shown in FIG. 4, the DC-AC conversion circuit 260 comprises a DC-DC converter 261 and a DC-AC converter 262 coupled in series. Specifically, the DC-AC conversion circuit 260 may have two stages of circuits, where the first stage of circuit is used to further boost the DC voltage to ensure it reaches a sufficiently high voltage level, and the second stage of circuit is used to convert the DC power into AC power, thereby ensuring that the power output by the inverter device 200 is adapted to be transmitted to the AC grid or equipment 20. In one embodiment, the controller 270 may control the DC-DC converter 261 in the DC-AC conversion circuit 260 to track the maximum power point of the second photovoltaic cell 120. Specifically, in the DC-AC conversion circuit 260 with the two stages of circuits, the controller 270 may achieve the MPPT operation on the second photovoltaic cell 120 by only controlling the former-stage DC-DC converter 261. Alternatively, the DC-AC conversion circuit 260 may also be a single-stage circuit which performs the boost inversion operation and/or MPPT operation. In one embodiment, the DC-DC converter 261 in the DC-AC conversion circuit 260 or the single-stage DC-AC conversion circuit 260 may include an isolation transformer to electrically isolate the photovoltaic module 100 from the AC grid or equipment 20 on the high-voltage side, thereby ensuring the safety of the equipment and personnel.

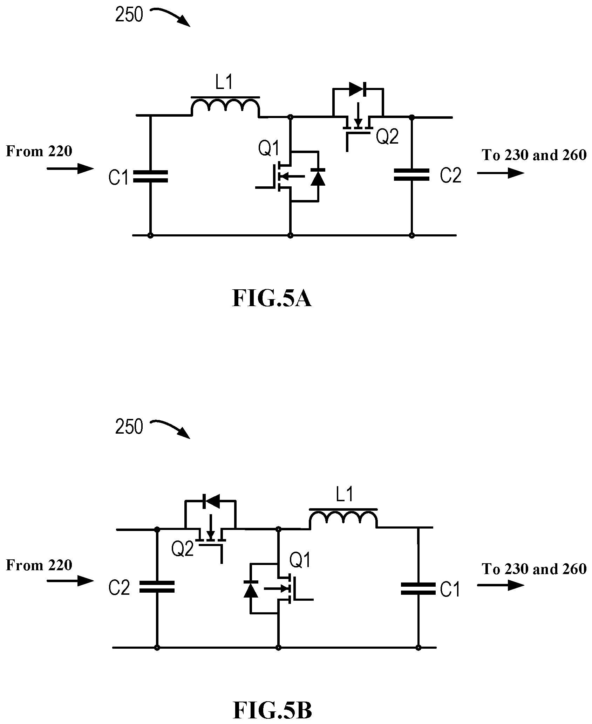

FIG. 5A and FIG. 5B illustrate schematic circuit diagrams of the DC-DC conversion circuit 250 in the inverter device 200 according to embodiments of the present disclosure. As shown in FIG. 5A, the DC-DC conversion circuit 250 may be a BOOST converter, including an inductor L1, power switching devices Q1 and Q2, and capacitors C1 and C2. When the voltage of the second input port 230 is higher than that of the first input port 220, the BOOST converter boosts the voltage of the first input port 220 and performs maximum power point tracking on the photovoltaic cell coupled to the first input port 220. For example, the first input port 220 is coupled to one side of capacitor C1 of the BOOST converter, and one side of the capacitor C2 is coupled to the second input port 230 and the input side of the DC-AC conversion circuit 260. Furthermore, the controller 270 may perform the boost operation and MPPT operation by performing a turn-on operation and a turn-off operation on the power switching device Q1 (e.g., in a PWM control mode). As shown in FIG. 5B, the DC-DC conversion circuit 250 may be a BUCK converter, with the same components and topology as the BOOST converter in FIG. 5A (the difference from FIG. 5A is that the input side and output side are swapped). When the voltage of the first input port 220 is higher than that of the second input port 230, the BUCK converter reduces the voltage of the first input port 220 and performs maximum power point tracking on the photovoltaic cell coupled to the first input port 220. For example, the first input port 220 is coupled to one side of capacitor C2 of the BUCK converter, and one side of capacitor C1 is coupled to the second input port 230 and the input side of the DC-AC conversion circuit 260. Furthermore, the controller 270 may perform the buck operation and MPPT operation by performing a turn-on operation and a turn-off operation on the power switching device Q2 (e.g., in a PWM control mode). It may be appreciated that the above implementation of the DC-DC conversion circuit 250 is merely exemplary, and other components and elements may be added, or some components and elements may be removed or replaced as needed. Additionally, in addition to the BOOST and BUCK circuits, the DC-DC conversion circuit 250 may also employ other types of DC boost or buck circuits that have been developed or will be developed in the future.

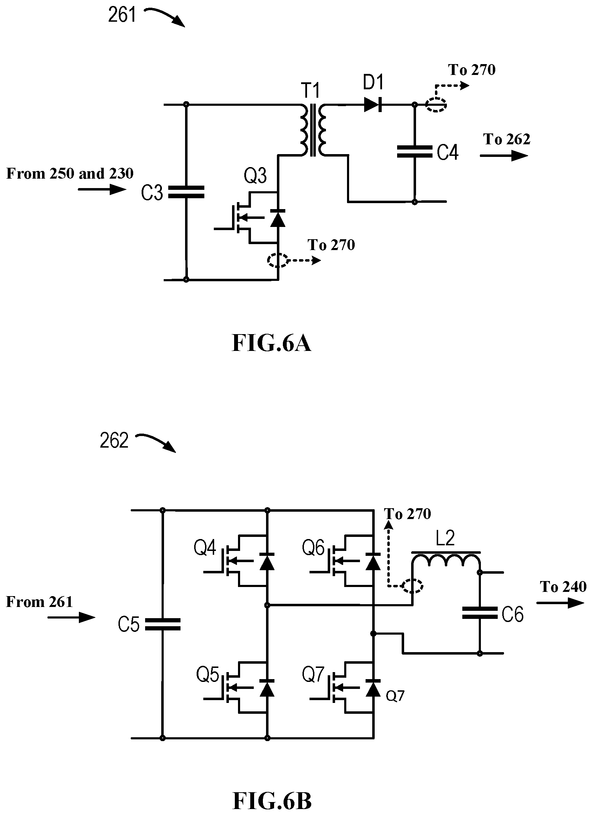

FIG. 6A and FIG. 6B illustrate schematic circuit diagrams of two stages of circuits 261 and 262 in the DC-AC conversion circuit 260 of the inverter device 200 according to embodiments of the present disclosure. As shown in FIG. 6A, the DC-DC converter 261 may be a flyback DC boost converter. For example, the flyback DC boost converter comprises a power switching device Q3, an isolation transformer T1, a diode D1, and capacitors C3 and C4. The flyback DC boost converter boosts the input voltage and performs maximum power point tracking (MPPT) on the photovoltaic cell coupled to the second input port 230. For instance, the second input port 230 and the output side of the DC-DC conversion circuit 250 are coupled to one side of the capacitor C3 of the flyback boost converter, and one side of the capacitor C4 is coupled to the later-stage DC-AC converter 262. Furthermore, the controller 270 may receive sensing information (e.g., the current at the source side of power switching device Q3, the output current of the flyback converter, and the sensed electrical quantities related to the MPPT operation) and perform boost operation and MPPT operation by performing a turn-on operation and a turn-off operation on the power switching device Q3 (e.g., in a PWM control mode). Additionally, the DC-DC converter 261, as the flyback DC boost converter, may employ active clamping technology and/or voltage-doubler rectification technology to improve the conversion efficiency of the converter and reduce voltage stress on the power switching device. As shown in FIG. 6B, the DC-AC converter 262 may be a full-bridge inverter. For example, the full-bridge inverter comprises power switching devices Q4, Q5, Q6, and Q7, an inductor L2, and capacitors C5 and C6. The full-bridge inverter inverts the input DC power. For example, the output side of the DC-DC converter 261 is coupled to one side of capacitor C5 of the full-bridge inverter, and one side of capacitor C6 is coupled to the output port 240. The controller 270 may receive sensing information (e.g., the inverter current output from the full-bridge arms) and perform the inversion operation by performing a turn-on operation and a turn-off operation on the power switching devices Q4, Q5, Q6, and Q7 (e.g., in PWM control mode).

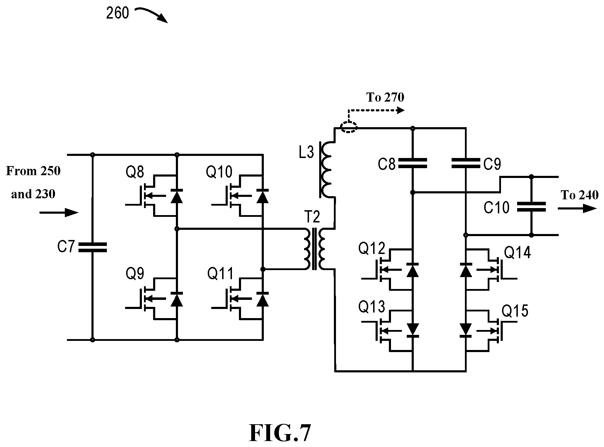

FIG. 7 illustrates a schematic circuit diagram of a single-stage circuit in the DC-AC conversion circuit 260 of the inverter device 200 according to an embodiment of the present disclosure. As shown in FIG. 7, the DC-AC conversion circuit 260 comprises an LLC-based inverter. For example, the LLC-based inverter may be an LLC-based cycloconverter, which comprises power switching devices Q8 to Q15, an isolation transformer T2, an inductor L3, and capacitors C7 to C10. The LLC-based inverter boosts the input voltage, inverts DC power, and performs maximum power point tracking on the photovoltaic cell coupled to the second input port 230. For instance, the output side of the DC-DC conversion circuit 250 and the second input port 230 are coupled to one side of capacitor C7 of the LLC-based inverter, and one side of capacitor C10 is coupled to the output port 240; furthermore, the controller 270 may receive sensing information (e.g., the inverter current output from the isolation transformer T2 and sensing electrical quantities related to the MPPT operation) and perform boost, inversion, and MPPT operations by performing a turn-on operation and a turn-off operation on the power switching devices Q8 to Q15 (e.g., i.e., a PWM control mode).

It may be appreciated that the above implementation of the DC-AC conversion circuit 260 is merely exemplary, and other components and elements may be added, or some components and elements may be removed or replaced as needed. Additionally, in addition to the flyback converter, the full-bridge inverter, and the LLC-based inverter circuit, the DC-AC conversion circuit 260 may also employ other types of DC-AC conversion circuits that have been developed or will be developed in the future.

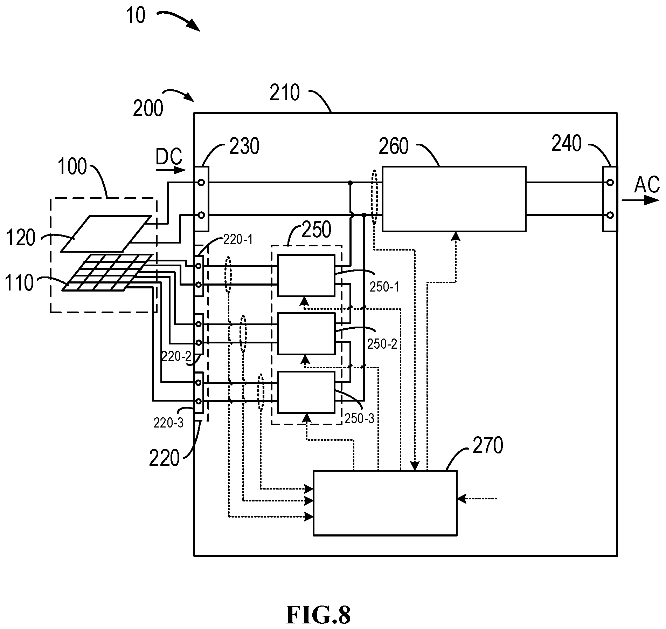

FIG. 8 illustrates a schematic circuit diagram of the photovoltaic system 10 according to yet another embodiment of the present disclosure. FIG. 8 differs from FIG. 3 is that the first input port 220 in FIG. 8 comprises a plurality of sub-input ports, e.g., sub-input ports 220-1, 220-2, and 220-3, and the DC-DC conversion circuit 250 comprises a plurality of DC-DC converters, e.g., DC-DC converters 250-1, 250-2, and 250-3. The plurality of DC-DC converters 250-1, 250-2, and 250-3 are coupled at their input sides to the plurality of sub-input ports 220-1, 220-2, and 220-3, respectively, and are coupled in series to each other at their output sides. In addition, the first photovoltaic cell 110 comprises multiple groups of photovoltaic cell units, and the plurality of sub-input ports 220-1, 220-2, and 220-3 are coupled to the multiple groups of photovoltaic cell units, respectively.

As an example, when the first photovoltaic cell 110 is a photovoltaic cell such as a crystalline silicon cell, the first photovoltaic cell 110 might be provided with a plurality of photovoltaic cell units which are divided into multiple groups, with each group containing at least one cell unit. In a conventional solution, a photovoltaic module needs to be equipped with a power distribution box to guide the DC power generated by the photovoltaic module to a later-stage of for example an inverter device. The power distribution box is typically provided with parallel-connected bypass diodes for each group of cell units in the multiple groups of cell units, the bypass diodes being configured to bypass the corresponding group of cell units under certain conditions. For example, in a case where a group of cell units is shaded or partially damaged, the bypass diode in parallel with the group of cell unit can bypass the group of cell units to prevent the group of cell units from damages due to the hot-spot effect, thereby ensuring the remaining cell units continue to operate. However, such bypass diodes cause the entire bypassed group of cell units to stop outputting power, even if only part of the group of cell units is shaded or damaged. Moreover, as parts relatively prone to damages and failure in the photovoltaic system, the power distribution box and the bypass diodes thereof often need to be maintained and replaced during the operational lifespan of the photovoltaic system and its photovoltaic modules. With the plurality of sub-input ports and plurality of DC-DC converters being provided in the inverter device 200, the power generated by each group of photovoltaic cell units may be directly regulated and output. For example, when a group of photovoltaic cell units are shaded, the corresponding DC-DC converter may perform voltage regulation for the output of the group of photovoltaic cell units and deliver the power to the external without need to bypass it. As such, it is unnecessary to provide traditional bypass diodes and junction box for the photovoltaic module. In this way, the reliability of the system is improved by removing failure-prone power distribution box and the bypass diodes thereof, while it can be ensured the group of cell units which are shaded or partially damaged can still output certain power, thereby improving the energy utilization efficiency.

In some embodiments, the controller 270 may control a corresponding DC-DC converter in the plurality of DC-DC converters 250-1, 250-2, and 250-3 to track the maximum power point of a corresponding group of photovoltaic cell units corresponding to the DC-DC converter. For example, the controller 270 may control the DC-DC converter 250-1 according to the maximum power point of the group of photovoltaic cell units coupled to the sub-input port 220-1, so that the DC-DC converter 250-1 adjusts the output voltage and current of the group of photovoltaic cell units to the maximum power point. In this manner, an independent MPPT operation can be performed for each group of photovoltaic cell units in the first photovoltaic cell 110, so that greater flexibility and higher power generation efficiency can be obtained.

In another embodiment, the plurality of DC-DC converters 250-1, 250-2, and 250-3 may be connected to the output port 230 in parallel on their output sides, or may be connected on their output sides to the output port 230 in a series/parallel hybrid manner (e.g., part of the converters, after being connected in series on the output sides, are connected in parallel with remaining converters on the output sides, or part of the converters, after being connected in parallel on the output sides, are connected to the remaining converters in series on the output sides). However, coupling the plurality of DC-DC converters the series connection manner is more advantageous over the parallel connection manner and series-parallel connection manner because the series connection manner may ensure that each DC-DC converter does not need to boost the voltage to an excessively high level, which makes the duty cycle of each DC-DC converter relatively moderate and makes it easier to obtain a higher output voltage, thereby improving overall efficiency.

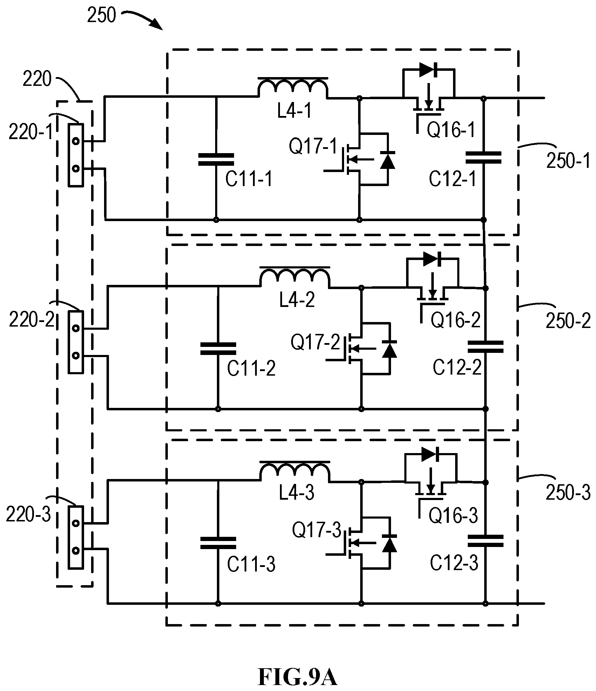

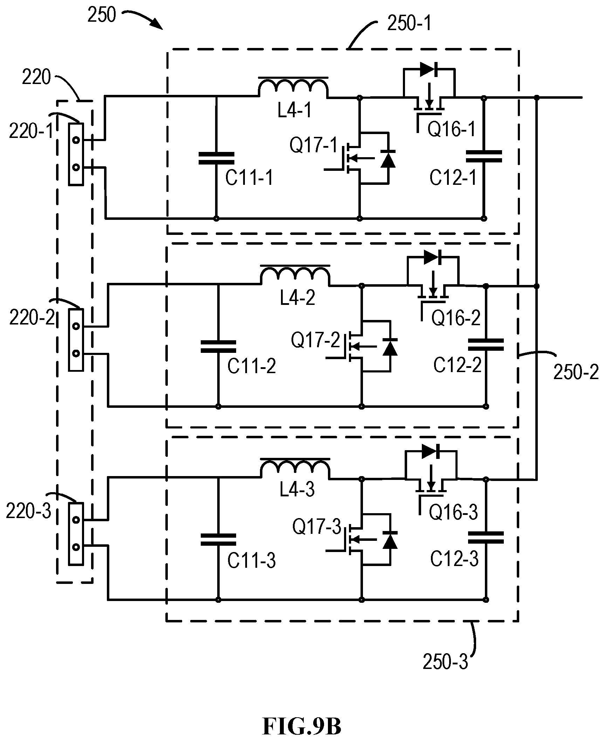

FIG. 9A and FIG. 9B illustrate schematic circuit diagrams of the first input port 220 and the DC-DC conversion circuit 250 of the inverter device 200 according to embodiments of the present disclosure. As shown in FIG. 9A, the plurality of DC-DC converters 250-1 to 250-3 of the DC-DC conversion circuit 250 are BOOST conversion circuits, respectively, and output the power after being connected in series to each other on their output sides. As an example, the DC-DC converter 250-1 comprises an inductor L4-1, power switching devices Q16-1 and Q17-1, and capacitors C11-1 and C12-1, and is coupled to a sub-input port 220-1 on one side of the capacitor C11-1; the DC-DC converter 250-2 comprises an inductor L4-2, power switching devices Q16-2 and Q17-2 and capacitors C11-2 and C12-2, and is coupled to a sub-input port 220-2 on one side of the capacitor C11-2; and the DC-DC converter 250-3 comprises an inductor L4-3, power switching devices Q16-3 and Q17-3, and capacitors C11-3 and C12-3, and is coupled to a sub-input port 220-3 on one side of the capacitor C11-3. The controller 270 may perform the boost operation and the MPPT operation on the groups of cell units coupled to the sub-input ports 220-1, 220-2 and 220-3, respectively, by controlling the power switching devices Q17-1, Q17-2 and Q17-3 (e.g., in a PWM control mode). FIG. 9B differs from FIG. 9A in that the plurality of DC-DC converters 250-1 to 250-3 in FIG. 9B output power after being connected in series to each other on the output sides. The elements or components and other connection manners of FIG. 9B are similar to those of FIG. 9A and will not be described in detail any more.

In addition, the number of bypass diodes in the conventional power distribution box is usually three. Therefore, the number of the plurality of sub-input ports 220-1, 220-2, and 220-3 and the plurality of DC-DC converters 250-1, 250-2, and 250-3 shown in FIG. 8, FIG. 9A and FIG. 9B is also three. However, the number of sub-input ports and corresponding DC-DC converters in the inverter device 200 may be more or less depending on the actual situations.

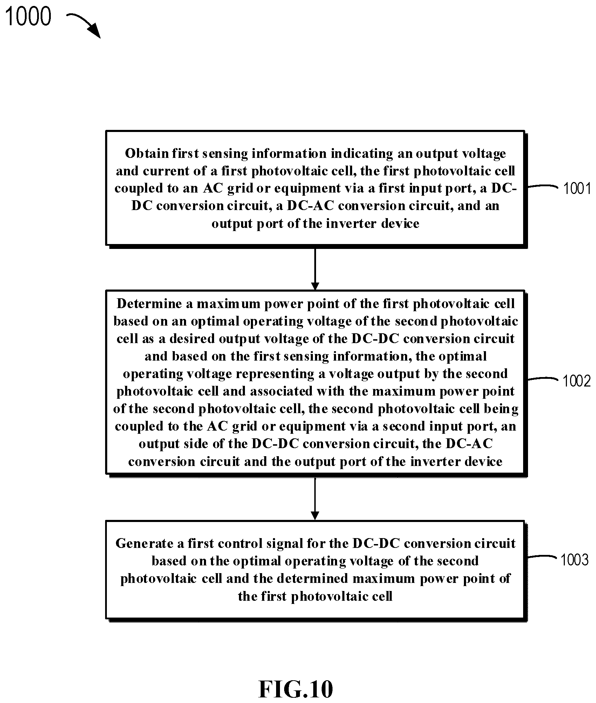

FIG. 10 illustrates a schematic flowchart of a method 1000 for controlling the inverter device 200 according to an embodiment of the present disclosure. The method 1000 may be implemented in the scenarios shown in FIG. 1, FIG. 3, FIG. 4, and FIG. 8 and executed by the controller 270. For ease of discussion, the method 1000 will be described with reference to FIG. 1 through FIG. 9.

At block 1001, the controller 270 obtains first sensing information indicative of the output voltage and current of the first photovoltaic cell 110, the first photovoltaic cell 110 being coupled to the AC grid or equipment 20 via the first input port 220, the DC-to-DC conversion circuit 250, the DC-AC conversion circuit 260 and the output port 240 of the inverter device 200. As an example, a sensing device may be provided on a connection line between the first photovoltaic cell 110 and the DC-DC conversion circuit 150, for example near the first input port 220, to sense the voltage and current generated and output by the first photovoltaic cell 110. The controller 270 may receive sensing information from the sensing device to learn about situations of the current output power of the first photovoltaic cell 110 in order to determine the maximum power point of the first photovoltaic cell 110 in the current state.

In some embodiments of the present disclosure, the controller 270 obtains a plurality of pieces of sub-sensing information respectively indicative of output voltages and currents of the plurality of groups of photovoltaic cell units in the first photovoltaic cell 110. As an example, in the photovoltaic system 10 shown in FIG. 8, a sensing device may be provided on a current path between each group of cell units of the first photovoltaic cell 110 and the corresponding DC-DC converter, e.g., near the sub-input ports 220-1, 220-2 and 220-3, to sense the voltage and current generated and output by each group of cell units. The controller 270 may receive a plurality of pieces of sub-sensing information from the sensing devices to learn about situations of the current output power of each group of cell units of the first photovoltaic cell 110. These sub-sensing information assist in determining the maximum power point of each group of cell units of the first photovoltaic cell 110 in the current state.

At block 1002, based on taking an optimal operating voltage of the second photovoltaic cell as a desired output voltage of the DC-DC conversion circuit 250, and based on the first sensing information, the controller 270 determines the maximum power point of the first photovoltaic cell 110, the optimal operating voltage representing a voltage output by the second photovoltaic cell 120 and associated with the maximum power point of the second photovoltaic cell 120, the second photovoltaic cell 120 being coupled to the AC grid or equipment 20 via the second input port 230, the output side of the DC-DC conversion circuit 250, the DC-AC conversion circuit 260 and the output port 240 of the inverter device 200. As an example, prior to applying control to the DC-DC conversion circuit 250, the controller 270 may determine or obtain the maximum power point of the second photovoltaic cell 120 in advance and determine an optimal operating voltage associated with the maximum power point, i.e., the second photovoltaic cell 120 may output the maximum power when the second photovoltaic cell 120 takes the optimal operating voltage as the output voltage of the cell. This optimum operating voltage is further taken as the desired output voltage on the output side of the DC-DC conversion circuit 250. For example, the controller 270 may utilize an MPPT algorithm to determine and track the maximum power point of the first photovoltaic cell 110 after obtaining the first sensing information indicative of the output voltage and current of the first photovoltaic cell 110 and determining the desired output voltage at the output side of the DC-DC conversion circuit 250. The MPPT algorithm may include algorithms such as a Perturb and Observe Method and an Incremental Conductance Method, and may include a related MPPT algorithm developed in the future. In this way, the voltage on the output side of the DC-DC conversion circuit 250 may be fixed at a certain voltage, so that the determination of the maximum power point of the first photovoltaic cell 110 becomes possible (if the voltage on the output side of the DC-DC conversion circuit 250 is in a variable state, the maximum power point of the first photovoltaic cell 110 cannot be determined); meanwhile, since the second photovoltaic cell 120 is directly coupled to the output side of the DC-DC conversion circuit 250 via the second output port 230, it is therefore also possible to ensure that the DC-DC conversion circuit 250 can adjust the voltage on its output side to match the voltage at the maximum power point of the second photovoltaic cell 120, thereby helping achieve the maximum power point tracking for the second photovoltaic cell 120.

In some embodiments of the present disclosure, for each DC-DC converter of the plurality of DC-DC converters 250-1, 250-2, 250-3, the controller 270 determines a desired output voltage corresponding to the corresponding DC-DC converter based on the optimal operating voltage and determines the maximum power point of a corresponding group of photovoltaic cell units based on the corresponding sub-sensing information and the corresponding desired output voltage. As an example, in the photovoltaic system 10 shown in FIG. 8, the plurality of DC-DC converters 250-1, 250-2, 250-3 are coupled to each other in series on the output side, so that the controller 270 may decompose the optimal operating voltage into the desired output voltages of the respective DC-DC converters in appropriate proportions to ensure that a sum of the plurality of desired output voltages equals the optimal operating voltage. For example, if the optimum operating voltage is 180V, which means that the total desired output voltage of the plurality of DC-DC converters 250-1, 250-2, 250-3 is 180V, the respective desired output voltages of the three DC-DC converters 250-1, 250-2, 250-3 may be set to 60V. Thus, the controller 270 may determine the desired output voltage of each of the DC-DC converters 250-1, 250-2, 250-3 on the output side. Further, after determining the desired output voltage of each DC-DC converter and acquiring voltage and current information of the group of cell units corresponding to each DC-DC converter, the controller 270 may determine the maximum power point of each group of photovoltaic cell units using the MPPT algorithm.

Alternatively, in a case where the plurality of DC-DC converters 250-1, 250-2, 250-3 are coupled to each other at the output sides thereof in a parallel manner or in a series/parallel hybrid manner, the controller 270 may determine the desired output voltage of each DC-DC converter in the DC-DC conversion circuit 250 in a similar manner, wherein the desired output voltage of each DC-DC converter 250-1, 250-2, 250-3 in a parallel manner is the same as the optimal operating voltage of the second photovoltaic cell 120; the desired output voltage of each DC-DC converter 250-1, 250-2, 250-3 in the series/parallel hybrid manner can be determined by decomposing the optimal operating voltage according to the actual connection mode, and it needs to ensured that the total output voltage of the output sides of the DC-DC converters is equal to the optimal operating voltage.

At block 1003, the controller 270 generates a first control signal for the DC-DC conversion circuit 250 based on the optimal operating voltage of the second photovoltaic cell 120 and the determined maximum power point of the first photovoltaic cell 110.

As an example, the controller 270 may determine the desired input voltage and current of the DC-DC conversion circuit 250 based on the determined maximum power point for the first photovoltaic cell 110. Since the input voltage and current of the DC-DC conversion circuit 250 are actually the output voltage and current of the first photovoltaic cell 110, when the DC-DC conversion circuit 250 adjusts its input voltage and current to the desired input voltage and current associated with the maximum power point of the first photovoltaic cell 110, it is possible to ensure that the first photovoltaic cell 110 operates at the maximum power point, thereby achieving maximum power point tracking for the first photovoltaic cell 110. In addition, the controller 270 further determines the optimal operating voltage of the second photovoltaic cell 120 as the desired output voltage of the DC-DC conversion circuit 250. Thus, the controller 270 may generate the first control signal to control the power switching device (e.g., Q1 or Q2) in the DC-DC conversion circuit 250 to perform a turn-on operation and a turn-off operation to adjust the voltage and current on both the input side and output side of the DC-DC conversion circuit 250 to a desired voltage and current level. In this way, not only maximum power point tracking for the first photovoltaic cell 110 is achieved, but also maximum power point tracking for the second photovoltaic cell 120 is facilitated since the voltage on the output side of the DC-DC conversion circuit 250 matches the voltage at the maximum power point of the second photovoltaic cell 120.

In some embodiments of the present disclosure, for each DC-DC converter of the plurality of DC-DC converters 250-1, 250-2, 250-3, the controller 270 generates a control signal for the corresponding DC-DC converter based on the corresponding desired output voltage and the maximum power point of the group of photovoltaic cell units corresponding to the corresponding DC-DC converter. As an example, in the photovoltaic system 10 shown in FIG. 8, the plurality of DC-DC converters 250-1, 250-2, 250-3 are coupled to each other in series on the output side, the controller 270 decomposes the optimal operating voltage of the second photovoltaic cell 120 into desired output voltages of the respective DC-DC converters in appropriate proportions and ensures that a sum of the plurality of desired output voltages is equal to the optimal operating voltage. In addition, the controller 270 may determine the desired voltage and current of each DC-DC converter 250-1, 250-2, 250-3 on the input side, i.e., the desired output voltage and current of each group of photovoltaic cell units of the first photovoltaic cell 110, according to the determined maximum power point for each group of cell units. After determining the desired output voltage and desired input voltage and current of each DC-DC converter, the controller 270 may, based thereon, sends a control signal to the power switching devices (e.g., Q17-1, Q17-2, and Q17-3) of each of the DC-DC converter 250-1, 250-2, 250-3 to adjust the voltage and/or current on the input side and output side of each of the DC-DC converter 250-1, 250-2, 250-3 to a desired voltage and/or current level. For example, controller 270 may generate a control signal for the power switching devices of the DC-DC converter 250-1 based on the desired input voltage and current and the desired output voltage of the DC-DC converter 250-1. Thereby, maximum power point tracking for each group of photovoltaic cell units in the first photovoltaic cell 110 can be achieved, and the second photovoltaic cell 120 is facilitated to operate at its maximum power point.

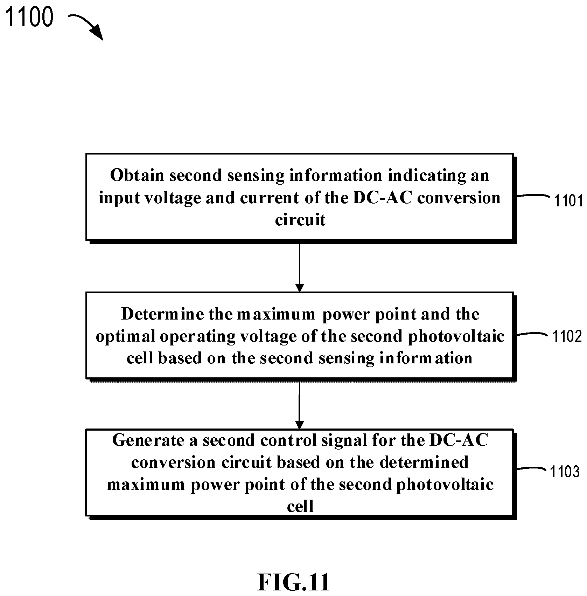

Fig. 11 illustrates a schematic flowchart of a process 1100 for controlling the inverter device 200 according to an embodiment of the present disclosure. Process 1100 may be an additional process of method 1000, wherein blocks 1101 and 1102 of process 1100 need to be performed prior to block 1002 in FIG. 10 to help determine the optimal operating voltage needed by block 1002. Apart from this, each block in process 1100 may be performed independently with respect to each block in FIG. 10.

At block 1101, the controller 270 obtains second sensing information indicative of the input voltage and current of the DC-AC conversion circuit 260. As an example, a sensing device may be provided on the input side of the DC-AC conversion circuit 260 or a connection line adjacent thereto to sense the voltage and current. The controller 270 may, for example, obtain the second sensing information from the provided sensing device to determine the maximum power point of the second photovoltaic cell 120 in the current state.

At block 1102, based on the second sensed information, the controller 270 determines the maximum power point of the second photovoltaic cell 120 and the aforementioned optimal operating voltage. As an example, the controller 270 may calculate and determine the maximum power point of the second photovoltaic cell 120 in the current state by using an MPPT algorithm based on the second sensing information. In the case where the maximum power point is determined, the output voltage of the second photovoltaic cell at the maximum power point is also naturally determined and will be taken as the optimal operating voltage of the second photovoltaic cell 120 and thus used to control the DC-DC conversion circuit 250 in block 1003.

At block 1103, the controller 270 generates a second control signal for the DC-AC conversion circuit 260 based on the determined maximum power point of the second photovoltaic cell 120. As an example, the controller 270 may control the DC-AC conversion circuit 260, or control the DC-DC converter 261 in the DC-AC conversion circuit 260, to ensure that the voltage of the DC-AC conversion circuit 260 at its input side is maintained as the voltage at the maximum power point (i.e., the optimal operating voltage), so that the second photovoltaic cell 120 can operate at the maximum power point in the current state to realize the MPPT.

In some embodiments of the present disclosure, a time interval at which the controller 270 generates the first control signal is less than that at which the controller 270 generates the second control signal. Specifically, the second control signal generated by the controller 270 is used to control the DC-AC conversion circuit 260 for maximum power tracking for the second photovoltaic cell 120, while the first control signal generated by the controller 270 is used to control the DC-DC conversion circuit 250 for maximum power tracking for the first photovoltaic cell 120. As previously discussed, controlling the DC-DC conversion circuit 250 to accomplish the maximum power point tracking for the first photovoltaic cell 110 needs to be based on determining the optimal operating voltage of the second photovoltaic cell 120 and controlling the DC-AC conversion circuit 260 to regulate the output voltage of the second photovoltaic cell 120. Therefore, the maximum power point tracing for the second photovoltaic cell 120 may be set to be performed slowly with a long period of a large length of time, and the maximum power point tracing for the first photovoltaic cell 110 may be set to be performed quickly with a short period of a small length of time. In one example, the length of time of the long period may be an integer multiple of the length of time of the short period. For example, the long period may be 1 second and the short period may be 100 milliseconds, i.e., one MPPT operating period for the second photovoltaic cell 120 may correspond to 10 MPPT operating periods for the first photovoltaic cell 110. In this manner, it may be ensured that the DC-DC conversion circuit 250 can be tracked to the maximum power point of the first photovoltaic cell 110 as quickly as possible through multiple MPPT operations in a short time without need to wait for tracing for the second photovoltaic cell 120, thereby improving the overall efficiency of the system.

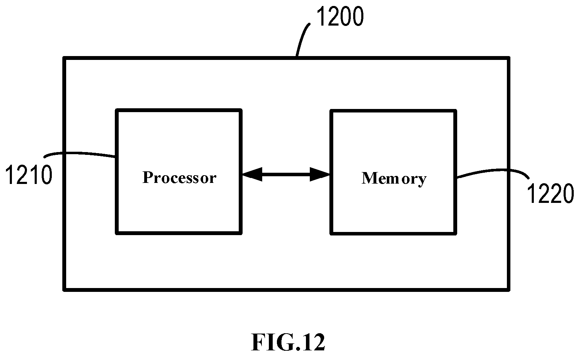

FIG. 12 illustrates a schematic diagram of a control device 1200 for controlling the inverter device 200 according to an embodiment of the present disclosure. The control device 1200 may be implemented as the controller 270 of FIG. 3, FIG. 4, and FIG. 8, and may implement the methods and processes of FIG. 10 and FIG. 11. As shown in FIG. 12, the control device 1200 may include a processor 1210 and a memory 1220 coupled to the processor 1210. The memory 1220 has stored therein instructions that, when executed by the processor 1210, cause the controller 1200 to perform the methods and processes of FIG. 10 and FIG. 11.

It will be appreciated by those skilled in the art that each step of the above method according to the present disclosure can be implemented via a general-purpose computing device, and they can be integrated on a single computing device or distributed over a network formed by a plurality of computing devices. Optionally, they can be implemented by program code executable by a computing device, such that they can be stored on a storage device to be executed by the computing device, or they are produced as various integrated circuit modules, respectively, or a plurality of modules or steps therein are made be implemented by a single integrated circuit module. As such, the present disclosure is not limited to any particular combination of hardware and software.

It will be noted that although various units or sub-units of the apparatus have been mentioned in the above detailed description, such partitioning is exemplary and non-limiting. In practice, according to the embodiments of the present invention, the features and functions of two or more devices described above may be embodied in one device. In turn, the features and functions of one device described above may be further embodied by multiple devices.

What are described above are only optional embodiments of the present disclosure, and not intended to limit the present disclosure, and for those skilled in the art, the present disclosure may allow for various modifications and variations. Any amendments, equivalent substitutions, improvements etc. made within the spirits and principles should be all included within the protection scope of the present disclosure.

## Claims

1. An inverter device (200), comprising:
a housing (210);
a first input port (220) adapted to be coupled to a first photovoltaic cell (110);
a second input port (230) adapted to be coupled to a second photovoltaic cell (120) different from the first photovoltaic cell (110);
an output port (240) adapted to be coupled to an AC grid or equipment (20);
a DC-DC conversion circuit (250) located within the housing (210), the DC-DC conversion circuit (250) having an input side coupled to the first input port (220) and an output side coupled to the second input port (230);
a DC-AC conversion circuit (260) located within the housing (210), the DC-AC conversion circuit (260) having an input side coupled to the second input port (230) and an output side coupled to the output port (240); and
a controller (270) coupled to the DC-DC conversion circuit (250) and the DC-AC conversion circuit (260) and configured to control the DC-DC conversion circuit (250) and the DC-AC conversion circuit (260).

2. The inverter device (200) according to claim 1, wherein the controller (270) is configured to control the DC-AC conversion circuit (260) to track a maximum power point of the second photovoltaic cell (120), and control the DC-DC conversion circuit (250) to take an optimal operating voltage associated with the maximum power point of the second photovoltaic cell (120) as a desired output voltage and track the maximum power point of the first photovoltaic cell (110).

3. The inverter device (200) according to claim 1, wherein the DC-AC conversion circuit (260) comprises a DC-DC converter (261) and a DC-AC converter (262) coupled in series, and
wherein the controller (270) is configured to control the DC-DC converter (261) in the DC-AC conversion circuit (260) to track the maximum power point of the second photovoltaic cell (120), and control the DC-DC conversion circuit (250) to take the optimal operating voltage associated with the maximum power point of the second photovoltaic cell (120) as the desired output voltage and track the maximum power point of the first photovoltaic cell (110).

4. The inverter device (200) according to claim 1, wherein the first input port (220) comprises a plurality of sub-input ports (200-1, 220-2, 220-3), and
wherein the DC-DC conversion circuit (250) comprises a plurality of DC-DC converters (250-1, 250-2, 250-3) which have input sides coupled to the plurality of sub-input ports (220-1, 220-2, 220-3), respectively, and have output sides coupled in series, in parallel, or in a series/parallel manner.

5. The inverter device (200) according to claim 4, wherein the first photovoltaic cell (110) comprises a plurality of groups of photovoltaic cell units, the plurality of sub-input ports (220-1, 220-2, 220-3) being adapted to be coupled to the plurality of groups of photovoltaic cell units respectively,
wherein the controller (270) is configured to control the DC-AC conversion circuit (260) to track the maximum power point of the second photovoltaic cell (120), and control the corresponding DC-DC converter in the plurality of DC-DC converters (250-1, 250-2, 250-3) to track the maximum power point of the group of photovoltaic cell units corresponding to the corresponding DC-DC converter.

6. The inverter device (200) according to claim 1, wherein the DC-AC conversion circuit (260) comprises an LLC-based inverter.

7. The inverter device (200) according to claim 2, wherein the DC-DC converter (261) in the DC-AC conversion circuit (260) comprises a flyback-type DC boost converter, and the DC-AC converter (262) in the DC-AC conversion circuit (260) comprises a full-bridge inverter.

8. The inverter device (200) according to claim 1 or 2, wherein the first photovoltaic cell (110) comprises a crystalline silicon cell, the second photovoltaic cell (120) comprises a perovskite cell, and the DC-DC conversion circuit (250) comprises a DC boost converter.

9. The inverter device (200) according to claim 1 or 2, wherein the first photovoltaic cell (110) comprises a perovskite cell, the second photovoltaic cell (120) comprises a crystalline silicon cell, and the DC-DC conversion circuit (250) comprises a DC buck converter.

10. A photovoltaic system (10), comprising:
a photovoltaic module (100), comprising:
a first photovoltaic cell (110);
a second photovoltaic cell (120) assembled with the first photovoltaic cell (110); and
the inverter device (200) according to any of claims 1-9, coupled to the photovoltaic module (100).

11. The photovoltaic system (10) according to claim 10, wherein the first photovoltaic cell (110) comprises a crystalline silicon cell located at the bottom of the photovoltaic module, and the second photovoltaic cell (120) comprises a perovskite cell located at the top of the photovoltaic module, or
the first photovoltaic cell (110) comprises a perovskite cell located at the top of the photovoltaic module, and the second photovoltaic cell (120) comprises a crystalline silicon cell located at the bottom of the photovoltaic module.

12. The photovoltaic system (10) according to claim 11, wherein the first photovoltaic cell (110) and the second photovoltaic cell (120) are assembled together in a stacked manner.

13. A method for controlling an inverter device (200), comprising:
obtaining (1001) first sensing information indicating an output voltage and current of a first photovoltaic cell (110), the first photovoltaic cell (110) coupled to an AC grid or equipment (20) via a first input port (220), a DC-DC conversion circuit (250), a DC-AC conversion circuit (260), and an output port (240) of the inverter device (200);
determining (1002) a maximum power point of the first photovoltaic cell (110) based on an optimal operating voltage of the second photovoltaic cell (120) as a desired output voltage of the DC-DC conversion circuit (250) and based on the first sensing information, the optimal operating voltage representing a voltage output by the second photovoltaic cell (120) and associated with the maximum power point of the second photovoltaic cell (120), the second photovoltaic cell (120) being coupled to the AC grid or equipment (200) via a second input port (230), an output side of the DC-DC conversion circuit (250), the DC-AC conversion circuit (260) and the output port (240) of the inverter device (200); and
generating (1003) a first control signal for the DC-DC conversion circuit (250) based on the optimal operating voltage of the second photovoltaic cell (120) and the determined maximum power point of the first photovoltaic cell (110).

14. The method according to claim 13, further comprising:
obtaining (1101) second sensing information indicating an input voltage and current of the DC-AC conversion circuit (260);
determining (1102) the maximum power point and the optimal operating voltage of the second photovoltaic cell (120) based on the second sensing information; and
generating (1103) a second control signal for the DC-AC conversion circuit (260) based on the determined maximum power point of the second photovoltaic cell (120).

15. The method according to claim 14, wherein a time interval for generating the first control signal is less than that for generating the second control signal.

16. The method according to any of claims 13-15,
wherein the obtaining (1001) first sensing information indicating an output voltage and current of the first photovoltaic cell (110) comprises:
obtaining a plurality of pieces of sub-sensing information respectively indicating output voltages and currents of a plurality of groups of photovoltaic cell units in the first photovoltaic cell (110),
wherein the determining (1002) a maximum power point of the first photovoltaic cell (110) comprises:
for each DC-DC converter of the plurality of DC-DC converters (250-1, 250-2, 250-3),
determining a desired output voltage corresponding to the corresponding DC-DC converter based on the optimal operating voltage; and
determining the maximum power point of a corresponding group of photovoltaic cell units based on the corresponding sub-sensing information and the corresponding desired output voltage, and
wherein the generating (1003) a first control signal for the DC-DC conversion circuit (250) comprises:
for each DC-DC converter of the plurality of DC-DC converters (250-1, 250-2, 250-3),
generating a control signal for the corresponding DC-DC converter based on the corresponding desired output voltage and the maximum power point of a group of photovoltaic cell units corresponding to the corresponding DC-DC converter.

17. A control apparatus (1200) for an inverter device (200), comprising:
a processor (1210); and
a memory (1220) coupled to the processor (1210), the memory having instructions stored therein which, when executed by the processor (1210), cause the controller (1200) to perform the method according to any of claims 13-16.

18. A computer readable storage medium having stored thereon computer program code which, when executed, performs the method according to any of claims 13-16.

19. A computer program product tangibly stored on a non-volatile computer readable medium and comprising machine executable instructions which, when executed, cause a machine to perform the steps of the method according to any of claims 13-16.
